# DEMANDE DE BREVET EUROPEEN

(11) **EP 2 866 283 A1**
(43) Date de publication de la demande: **29.04.2015**
(21) Numéro de dépôt: 14189650.6
(22) Date de dépôt: 21.10.2014
(51) Int. Cl.: H01M 4/133, H01M 4/38, H01M 4/485, H01M 4/583, H01M 4/62, H01M 10/0525, H01M 10/0568, H01M 10/0569

(54) **Cellule électrochimique pour accumulateur au lithium et accumulateur au lithium comprenant une telle cellule électrochimique**

(30) Priorité: 23.10.2013 FR 1360320
(71) Demandeur: Commissariat à l'Énergie Atomique et aux Énergies Alternatives, 75015 Paris (FR)
(72) Inventeur: Martin, Jean-Frédéric, 38140 Renage (FR); Caironi, Clément, 34070 Montpellier (FR); Reynier, Yvan, 38120 Saint-Égrève (FR)
(74) Mandataire: Brevalex

(57) **Abrégé**

L'invention se rapporte à une cellule électrochimique pour accumulateur au lithium comprenant une électrode positive comprenant du graphite, une électrode négative ainsi qu'une solution électrolytique disposée entre les électrodes positive et négative, la solution électrolytique comprenant au moins un sel de lithium et au moins un solvant.

Selon l'invention, le sel de lithium est l'oxalyldifluoroborate de lithium LiODFB et le solvant est un solvant organique.

L'invention se rapporte également à un accumulateur au lithium comprenant une telle cellule électrochimique ainsi qu'à l'utilisation d'une telle cellule électrochimique ou d'un tel accumulateur au lithium dans les domaines des appareils grand public (téléphonie cellulaire, photographie numérique, micro-informatique), de la sécurité ou encore de l'aérospatiale.

## Description

### DOMAINE TECHNIQUE

Le domaine technique général de l'invention peut être défini comme celui des accumulateurs électrochimiques qui permettent la conversion, en système fermé, de l'énergie chimique en énergie électrique, et inversement.

Plus particulièrement, la présente invention se rapporte à une cellule électrochimique pour accumulateur au lithium ainsi qu'à un accumulateur au lithium, ou batterie rechargeable au lithium, comprenant au moins une telle cellule électrochimique.

De tels accumulateurs trouvent leur application dans de nombreux domaines, notamment dans le domaine des appareils électroniques grand public, comme ceux de la photographie numérique, de la téléphonie cellulaire, de la micro-informatique portable, dans le domaine de la sécurité, de l'aérospatiale ou encore des véhicules électriques.

### ÉTAT DE LA TECHNIQUE ANTÉRIEURE

Dans le domaine vaste des batteries, on distingue les batteries non rechargeables, également dénommées piles ou piles primaires (et "primary batteries" en anglais), des batteries rechargeables, encore appelées piles secondaires ou accumulateurs (et "secondary batteries" en anglais).

C'est dans ce second domaine des accumulateurs que s'inscrit la présente invention. Pour éviter tout risque de confusion, le terme "accumulateur" est celui qui est retenu dans toute la suite de la présente description.

La présente invention s'intéresse, plus particulièrement, aux accumulateurs qui comprennent au moins une cellule électrochimique dans laquelle se produit une réaction électrochimique qui met en oeuvre le lithium. De tels accumulateurs sont couramment appelés "accumulateurs au lithium" ou "accumulateurs lithium".

De manière générale, on distingue plusieurs catégories d'accumulateurs au lithium.

Une première catégorie est formée par les accumulateurs dits "lithium-métal" dans lesquels l'électrode négative de la cellule électrochimique est composée de lithium métallique. Toutefois, cette technologie a été abandonnée pour des raisons de sécurité, notamment liées à la difficulté de reconstituer cette électrode négative au cours des recharges successives. En effet, une fois endommagée, cette électrode en lithium métallique peut accidentellement atteindre son point de fusion de 180,5°C et entrer en contact avec l'électrode positive, engendrant alors une réaction de gaz violente et l'émission de gaz brûlants.

Une deuxième catégorie est formée par les accumulateurs dits "lithium-ion", ou "Li-ion", dans lesquels l'électrolyte comprend du lithium sous forme ionique. Les cellules électrochimiques de tels accumulateurs, qui comprennent classiquement une électrode négative en carbone ou graphite et une électrode positive en un oxyde de métal de transition, mettent en oeuvre des cycles réversibles d'intercalation et de désintercalation des cations lithium Li⁺ au niveau desdites électrodes. Par exemple, le cation Li⁺, de par son intercalation entre les couches de graphène formant le graphite, est apte à former avec ce dernier un composé appelé "composé d'intercalation du graphite" (en anglais, "graphite intercalation compound" et abrégé GIC).

Ainsi, lors de la décharge de l'accumulateur lithium-ion, les cations Li⁺ se désinsèrent (se désintercalent) de l'électrode négative, se déplacent de proche en proche au sein de la solution électrolytique pour s'intercaler dans le réseau cristallin de l'électrode positive. Le passage de chaque cation Li⁺ dans le circuit interne de l'accumulateur est exactement compensé par le passage d'un électron dans le circuit externe, générant ainsi un courant électrique.

Inversement, lors de la charge de l'accumulateur, se produisent la désintercalation des cations Li⁺ à partir de l'électrode positive puis, après déplacement au travers de la solution électrolytique, l'intercalation desdits cations Li⁺ dans la structure cristalline de l'électrode négative.

Très récemment, une troisième catégorie d'accumulateurs a été proposée. Il s'agit des accumulateurs dits "ion-double", ou "dual-ion" en anglais. On peut notamment se référer à la publication de T. Placke et al. ("Reversible intercalation of bis(trifluoromethanesulfonyl)imide anions from an ionic liquid electrolyte into graphite for high performance dual-ion cells", J. Electrochem. Soc., 2012, 159(11), A1755-A1765), référencée **[1]** à la fin de la présente description.

Les cellules électrochimiques de tels accumulateurs comprennent une électrode positive en graphite, une électrode négative en lithium métallique ou en titanate de lithium Li₄Ti₅O₁₂ ainsi qu'une solution électrolytique formée par un électrolyte et un liquide ionique comme solvant, ce solvant étant uniquement composé d'ions et ne contenant pas de molécules de solvant organique.

La publication **[1]** envisage plus particulièrement la mise en oeuvre de bis(trifluorométhanesulfonyl)imide de lithium (abrégé LiTFSI) comme électrolyte et de bis(trifluorométhanesulfonyl)imide de N-butyl-N-méthylpyrrolidinium (abrégé Pyr₁₄TFSI) comme solvant. Seuls les cations Li⁺ et les anions TFSI⁻ participent aux réactions qui se produisent lors de la charge et de la décharge de l'accumulateur.

Ainsi, lors de la charge d'un tel accumulateur, les anions TFSI⁻ s'intercalent dans l'électrode positive en graphite tandis que les cations Li⁺ :
- soit s'insèrent dans l'électrode négative, lorsque cette dernière est en titanate de lithium,
- soit sont réduits sous forme de lithium métallique à la surface de l'électrode négative, lorsque cette dernière est elle-même en lithium métallique.

Lors de la décharge, les anions TFSI⁻ ainsi que les cations Li⁺, le cas échéant formés par oxydation du lithium métallique lorsque ce dernier constitue le matériau de l'électrode négative, sont relargués dans la solution électrolytique.

Les auteurs de cette publication **[1]** mettent en avant la grande stabilité vis-à-vis de l'oxydation de la cellule électrochimique d'un tel accumulateur. Cette stabilité, qui provient notamment du choix de l'électrolyte et d'un liquide ionique comme solvant, permet en particulier d'éviter la corrosion du collecteur de courant de l'électrode positive par l'anion TFSI⁻ et, de manière plus générale, une utilisation d'un tel accumulateur à des tensions de cellule électrochimique élevées.

Toutefois, l'emploi d'un liquide ionique comme solvant engendre un surcoût non négligeable. En outre, la mise en oeuvre de telles cellules électrochimiques, qui se fait à plus haute température (de l'ordre de 60°C), devient également plus compliquée.

Aussi, et notamment en raison du coût d'un accumulateur doté d'une cellule électrochimique telle que décrite ci-dessus, la mise en oeuvre de LiTFSI comme électrolyte dans un solvant formé par un liquide ionique tel que Pyr₁₄TFSI est rédhibitoire, d'un point de vue économique, pour une large utilisation et, en particulier, pour des applications grand public.

Une quatrième catégorie d'accumulateurs est formée par les accumulateurs dits "graphite-double", ou "dual-graphite" en anglais. Les cellules électrochimiques de tels accumulateurs comprennent des électrodes positive et négative comprenant du graphite, tandis que la solution électrolytique comprend un solvant organique et un électrolyte choisi parmi un sel répondant à la formule LiA, le cation Li⁺ et l'anion A⁻ étant tous deux aptes à former des composés d'intercalation du graphite.

Ainsi, lors de la charge de l'accumulateur de type graphite-double, les cations Li⁺ s'intercalent dans l'électrode négative tandis que les anions A⁻ s'intercalent simultanément dans l'électrode positive.

Lors de la décharge, les cations Li⁺ et les anions A⁻ sont relargués dans la solution électrolytique.

Parmi les anions A⁻ susceptibles d'être mis en oeuvre dans ce type d'accumulateurs graphite-double, on peut notamment citer PF₆⁻, BF₄⁻, AlCl₄⁻, l'ion triflate CF₃SO₃⁻ ou encore (CF₃SO₂)₂N⁻.

Dans ces accumulateurs graphite-double, la différence de potentiel entre les électrodes est élevée puisque le cation Li⁺ s'intercale dans l'électrode négative sous une tension de 0,2 V tandis que l'anion A⁻ s'intercale dans l'électrode positive sous des tensions pouvant s'élever jusqu'à 4 V, voire 5,5 V, ce qui est notamment le cas de l'anion PF₆⁻.

On relève cependant un certain nombre d'inconvénients liés à la mise en oeuvre de certains des anions qui viennent d'être cités, notamment en termes de stabilité des cellules électrochimiques comprenant de tels électrolytes LiA lorsque les tensions appliquées sont élevées et, en particulier, lorsqu'elles sont supérieures à 4 V.

Par exemple, à partir d'une tension de l'ordre de 4 V, AlCl₄⁻ corrode les membranes de séparation ainsi que la structure des cellules électrochimiques tandis que CF₃SO₃⁻ corrode le collecteur de courant de l'électrode positive, qui est classiquement formé par une feuille en aluminium.

Si LiPF₆ et LiBF₄ font, quant-à-eux, partie des électrolytes les plus stables lorsque les tensions appliquées sont élevées, leurs anions PF₆⁻ et BF₄⁻ conduisent néanmoins à la formation de quantités non négligeables de fluorure d'hydrogène HF dans la solution électrolytique et donc à la dangerosité de cette dernière, notamment lorsqu'il devient nécessaire d'intervenir sur la structure de cette cellule électrochimique elle-même ou de l'accumulateur au lithium comprenant une telle cellule électrochimique.

Le but de l'invention est, par conséquent, de pallier les inconvénients de l'art antérieur et de proposer une cellule électrochimique pour un accumulateur au lithium comprenant une électrode positive à base de graphite, cette cellule électrochimique présentant les avantages que confère le sel LiTFSI lorsqu'il est utilisé en tant qu'électrolyte dans une cellule électrochimique d'un accumulateur de type ion-double comme décrit dans la publication **[1],** et notamment une stabilité vis-à-vis de l'oxydation permettant son utilisation à des tensions élevées de cellule électrochimique, tout en étant économiquement plus avantageux que n'est ce sel LiTFSI.

En plus d'être utilisable pour des fonctionnements sous des tensions élevées, la cellule électrochimique selon l'invention doit bien évidemment répondre aux critères de sécurité et notamment permettre une utilisation, dans des accumulateurs au lithium, qui puisse être envisagée sans formation de fluorure d'hydrogène HF ou d'un quelconque autre gaz assurant ainsi une utilisation de la cellule électrochimique et de l'accumulateur au lithium la comprenant qui ne présente pas de risque pour l'utilisateur.

### EXPOSÉ DE L'INVENTION

Les buts précédemment énoncés ainsi que d'autres sont atteints, en premier lieu, par une cellule électrochimique pour accumulateur au lithium, et notamment un accumulateur au lithium du type ion-double, cette cellule électrochimique comprenant une électrode positive comprenant du graphite, une électrode négative ainsi qu'une solution électrolytique disposée entre les électrodes positive et négative.

Selon l'invention, la solution électrolytique comprend au moins un sel de lithium et au moins un solvant, ce sel de lithium étant l'oxalyldifluoroborate de lithium LiODFB et le solvant étant un solvant organique.

L'oxalyldifluoroborate de lithium, également connu sous le nom de difluoromono(oxalato)borate de lithium et abrégé LiODFB, est un sel de lithium de la famille des oxalato-borates.

L'oxalyldifluoroborate de lithium LiODFB répond plus précisément à la formule chimique développée suivante :

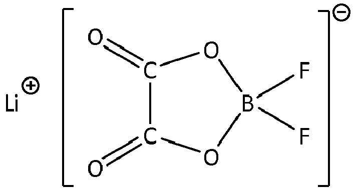

Ce sel LiODFB peut, en particulier, se représenter sous la forme suivante :

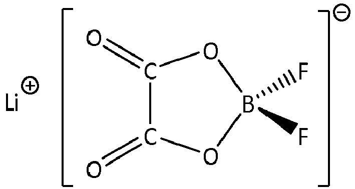

L'utilisation de ce sel de lithium LiODFB comme électrolyte a été décrite pour la première fois dans la publication **[2]** de S. S. Zhang ("A unique lithium salt for the improved electrolyte of Li-ion battery", Electrochem. Commun., 2006, 8, 1423-1428) puis, plus récemment, dans la publication **[3]** de V. Aravindan et al. ("Lithium-ion conducting electrolyte salts for lithium batteries", Chem. Eur. J., 2011, 17, 14326-14346).

Toutefois, dans ces publications **[2]** et **[3],** le LiODFB est proposé comme électrolyte dans des cellules électrolytiques d'accumulateurs de type lithium-ion, en raison des avantages combinés du bis(oxalato)borate de lithium (LiBOB) et du tétrafluoroborate de lithium (LiFB₄) qu'il présente du fait de sa structure chimique, ce sel LiODFB étant en effet constitué d'une moitié de molécule de LiBOB, d'une part, et d'une moitié de molécule de LiBF₄, d'autre part. On peut en particulier se reporter à la page 1428 de la publication **[2]** qui fait une liste exhaustive des nombreux avantages conférés par le LiODFB utilisé comme électrolyte dans un accumulateur lithium-ion. Parmi ces avantages, on peut mentionner une conductivité ionique améliorée sur une gamme étendue de températures, une excellente capacité à passiver l'électrode positive ainsi qu'à supporter les hautes tensions. En outre, la dégradation de telles cellules électrolytiques fonctionnant avec du LiODFB comme électrolyte, en cas de surcharge d'accumulateurs les comprenant, dégage moins de chaleur que celle de cellules électrolytiques fonctionnant avec d'autres sels de lithium tels que le LiBF₆. En outre, le gaz formé lors de cette dégradation étant du gaz carbonique CO₂, et non du fluorure d'hydrogène HF, l'emploi du LiODFB s'avère présenter moins de risque lors d'une utilisation des accumulateurs fonctionnant avec un tel sel de lithium.

Si effectivement l'oxalyldifluoroborate de lithium LiODFB est un électrolyte connu dans l'état de la technique, et notamment des publications **[2]** et **[3]** qui viennent d'être citées, cet électrolyte n'est décrit que pour des accumulateurs de type lithium-ion qui mettent en oeuvre des cycles d'intercalation et de désintercalation du seul cation Li⁺.

Or, les inventeurs ont constaté que, de manière inattendue et surprenante, cet électrolyte LiODFB pouvait très avantageusement être utilisé dans une cellule électrochimique selon l'invention mettant en oeuvre une électrode positive comprenant du graphite, une électrode négative ainsi qu'une solution électrolytique, ladite cellule électrolytique étant destinée à être incorporée dans un accumulateur et, en particulier, dans un accumulateur de type ion-double.

En effet, les inventeurs ont observé que, lors de la charge de l'accumulateur comprenant une telle cellule électrochimique, l'anion oxalyldifluoroborate ODFB⁻ de ce sel LiODFB s'intercale entre les couches de graphène du graphite de l'électrode positive, de manière à former avec ce dernier un composé d'intercalation du graphite.

Ce constat est d'autant plus inattendu et surprenant que cette capacité d'intercalation électrochimique de l'anion ODFB⁻ entre les couches de graphène du graphite de l'électrode positive ne se produit pas avec d'autres composés de cette même famille des oxalato-borates.

Ceci est en particulier le cas du bis(oxalato)borate de lithium, abrégé LiBOB, qui correspond au premier composé de cette famille des oxalato-borates qui a été synthétisé. Ce premier composé, qui est notamment décrit dans le document US 6,506,516 (référencé **[4]**), est connu, depuis le début des années 2000, comme un électrolyte pour des accumulateurs de type lithium-ion. La publication **[5]** de W. Xu ("LiBOB and its derivatives", Electrochemical. Solid-State Lett., 2001, 4(1), E1-E4) mentionne l'utilisation possible du LiBOB comme électrolyte dans des accumulateurs au lithium, éventuellement sous forme polymérique, en raison de la haute stabilité électrochimique de la solution électrolytique formée par le LiBOB dans du carbonate de propylène comme solvant, cette stabilité électrochimique pouvant aller jusqu'à une tension appliquée d'environ 4,5 V par rapport au couple Li⁺/Li.

Grâce à cette faculté qu'a l'anion oxalyldifluoroborate ODFB⁻ de former un composé d'intercalation du graphite au sein de l'électrode positive, les inventeurs ont montré qu'il est également possible d'utiliser le LiODFB comme électrolyte dans une cellule électrochimique d'un accumulateur de type graphite-double dans lequel les électrodes positive et négative comprennent toutes deux du graphite et ce, avec des résultats tout à fait concluants, comme le montreront les exemples de modes de réalisation particuliers de l'invention décrits ci-après.

L'utilisation de l'oxalyldifluoroborate de lithium LiODFB comme électrolyte, que ce soit dans une cellule électrochimique pour un accumulateur ion-double ou dans une cellule électrochimique pour un accumulateur graphite-double, est tout à fait satisfaisante, puisqu'elle permet d'ajouter aux avantages déjà identifiés pour le sel LiODFB, notamment par la publication **[2],** celui d'être moins coûteux que le sel LiTFSI utilisé en association avec un liquide ionique comme décrit dans la publication **[1].**

Avant d'entrer plus en détail dans l'exposé de la présente invention, il y a lieu de préciser certaines des terminologies utilisées dans ce qui vient d'être décrit et dans ce qui va suivre, ces terminologies étant celles classiquement adoptées dans le domaine des accumulateurs au lithium.

Par "électrode positive", on entend l'électrode qui fait office de cathode lorsque l'accumulateur est en processus de décharge, c'est-à-dire lorsqu'il débite du courant, et qui fait office d'anode lorsque cet accumulateur est en processus de charge.

Par "électrode négative", on entend l'électrode qui fait office d'anode lorsque l'accumulateur est en processus de décharge, c'est-à-dire lorsqu'il débite du courant, et qui fait office de cathode lorsque cet accumulateur est en processus de charge.

Dans le cadre de la présente l'invention, par "électrode comprenant du graphite", on entend que le graphite constitue le matériau électro-chimiquement actif de l'électrode considérée, c'est-à-dire le matériau susceptible d'intercaler un anion.

Ainsi, dans un mode de réalisation préféré de l'invention, l'électrode positive ne comprend pas d'autre matériau électro-chimiquement actif que le graphite. Dans un mode de réalisation préféré de l'invention, l'électrode positive ne comprend pas de conducteur électronique additionnel.

Dans une variante avantageuse de l'invention, l'électrode positive comprend au moins 50% en masse de graphite, de préférence au moins 80% en masse.

Dans un autre mode de réalisation de l'invention, l'électrode positive de la cellule électrochimique peut comprendre une feuille métallique, de préférence laminée, revêtue d'une composition à base de graphite, cette composition pouvant notamment être déposée sur la feuille métallique par enduction.

Cette feuille métallique, qui est classiquement réalisée en aluminium, assure la fonction de collecteur de courant cathodique (lorsque l'accumulateur est en décharge) et permet d'assurer la connexion électrique.

La composition à base de graphite qui recouvre la feuille métallique comprend du graphite. Elle peut avantageusement en outre comprendre au moins un liant et/ou au moins un composé électriquement conducteur.

Parmi les liants susceptibles d'être utilisés dans cette composition à base de graphite, on peut notamment citer la carboxyméthylcellulose (CMC), mais il reste tout à fait envisageable d'utiliser d'autres liants polymériques.

Parmi les composés électriquement conducteurs, on peut citer les composés carbonés, comme un noir de carbone et, par exemple, le noir de carbone conducteur Super P^{®} commercialement disponible auprès de la société Timcal.

Dans une version avantageuse de l'invention, la composition à base de graphite comprend au moins 80% en masse de graphite et, avantageusement, de 0 à 10% en masse d'un ou de plusieurs liants et/ou de 0 à 10% en masse d'un ou de plusieurs composés électriquement conducteurs.

Dans une première variante de réalisation de la cellule électrochimique selon l'invention, l'électrode négative de la cellule électrochimique comprend du lithium métallique ou un oxyde métallique comprenant du lithium, également dénommé "oxyde métallique lithié". A titre d'exemple d'oxyde métallique lithié, on peut citer le titanate de lithium Li₄Ti₅O₁₂ qui est notamment décrit dans la publication **[1].**

L'accumulateur au lithium comprenant une cellule électrochimique dans cette première variante de réalisation est alors un accumulateur de type ion-double dans lequel les cations Li⁺ et les anions ODFB⁻ participent aux réactions se produisant lors de la charge et de la décharge de l'accumulateur.

Ainsi, lors de la charge de l'accumulateur, les anions ODFB⁻ s'intercalent dans l'électrode positive comprenant du graphite tandis que les cations Li⁺ sont simultanément réduits sous forme de lithium métallique Li° à la surface de l'électrode négative en lithium métallique. Lors de la décharge, les anions ODFB⁻ et cations Li⁺ sont relargués dans la solution électrolytique.

Dans une deuxième variante de réalisation de la cellule électrochimique selon l'invention, l'électrode négative de la cellule électrochimique comprend du graphite.

L'accumulateur au lithium comprenant une telle cellule électrochimique est alors un accumulateur de type graphite-double dans lequel les cations Li⁺ et les anions ODFB⁻ participent aux réactions se produisant lors de la charge et de la décharge de l'accumulateur.

Plus particulièrement, lors de la charge de l'accumulateur, les cations Li⁺ s'intercalent dans le graphite de l'électrode négative tandis que les anions ODFB⁻ s'intercalent simultanément dans le graphite de l'électrode positive. Lors de la décharge, les cations Li⁺ et anions ODFB⁻ sont relargués dans la solution électrolytique.

Dans un mode de réalisation de l'invention, l'électrode négative de la cellule électrochimique peut comprendre une feuille métallique, de préférence laminée, qui est revêtue, par exemple par enduction, d'une composition à base de graphite.

Cette feuille métallique assure la fonction de collecteur de courant anodique (lorsque l'accumulateur est en décharge) et permet d'assurer la connexion électrique. Elle est réalisée en un métal qui présente un potentiel standard d'oxydoréduction supérieur à celui du métal de la feuille métallique de l'électrode positive. La feuille métallique de l'électrode peut notamment être une feuille de cuivre.

Pour ce qui concerne la composition à base de graphite destinée à revêtir l'électrode négative de la cellule électrochimique d'un accumulateur graphite-double, on peut avantageusement se reporter à ce qui a été précédemment décrit pour la composition à base de graphite destinée à revêtir l'électrode positive.

En particulier, cette composition à base de graphite pour l'électrode négative comprend au moins 80% en masse de graphite et, avantageusement, de 0 à 10% en masse d'un ou de plusieurs liants et/ou de 0 à 10% en masse d'un ou de plusieurs composés électriquement conducteurs.

Une configuration particulière de la cellule électrochimique d'un accumulateur graphite-double peut prévoir l'utilisation d'une même composition à base de graphite pour les électrodes positive et négative.

Quelle que soit la variante de réalisation de l'électrode négative de la cellule électrochimique selon l'invention, que cette électrode soit constituée par du lithium métallique, par un oxyde métallique lithié ou qu'elle comprenne du graphite, la solution électrolytique, qui est disposée entre l'électrode positive et l'électrode négative, est une solution qui comprend le sel LiODFB dans un solvant organique, et non dans un liquide ionique comme dans la publication **[1].**

Ce solvant organique comprend avantageusement au moins un solvant carbonate qui peut être choisi parmi les carbonates cycliques, les carbonates linéaires mais également parmi les mélanges de ceux-ci.

Le choix d'un ou de plusieurs solvants carbonates est privilégié dans la mesure où le sel LiODFB y est très soluble, ce qui permet d'obtenir une solution électrolytique qui n'est pas trop visqueuse, permettant ainsi à l'accumulateur correspondant de fonctionner à plus faible température.

A titre d'exemples de carbonates cycliques, on peut citer le carbonate d'éthylène (EC) ou encore le carbonate de propylène (PC).

A titre d'exemples de carbonates linéaires, on peut citer le carbonate de diméthyle (DMC), le carbonate de diéthyle (DEC) ou encore le carbonate éthylique méthylique (EMC).

Dans une variante avantageuse de l'invention, le solvant carbonate comprend au moins un composé choisi parmi le groupe constitué par le carbonate d'éthylène (EC), le carbonate de propylène (PC), le carbonate éthylique méthylique (EMC) et le carbonate de diméthyle (DMC).

Dans une variante préférée de l'invention, le solvant carbonate est un mélange ternaire équivolumique de carbonate d'éthylène (EC), de carbonate éthylique méthylique (EMC) et de carbonate de diméthyle (DMC).

Selon une alternative, le solvant organique peut comprendre au moins un ester, un éther ou une sulfone.

Dans la solution électrolytique de la cellule électrochimique selon l'invention, le sel d'oxalyldifluoroborate de lithium LiODFB peut être présent dans une concentration molaire comprise entre 0,5 mol/l et 1,5 mol/l, avantageusement entre 0,8 mol/l et 1,2 mol/l et, préférentiellement, qui est de l'ordre de 1 mol/l.

Dans un mode de réalisation particulier de l'invention, la cellule électrochimique peut en outre comprendre au moins une membrane de séparation électriquement non conductrice disposée entre les électrodes positive et négative de ladite cellule électrochimique. Une telle membrane de séparation est hydrauliquement perméable, ce qui signifie qu'elle laisse passer les ions.

Cette membrane de séparation peut être en un matériau poreux apte à accueillir la solution électrolytique dans sa porosité. On dit alors que la solution électrolytique imbibe cette membrane de séparation.

On peut en particulier mettre en oeuvre une membrane de séparation telle que disponible commercialement auprès de la société Celgard.

L'invention se rapporte, en second lieu, à un accumulateur au lithium.

Selon l'invention, cet accumulateur au lithium comprend au moins une cellule électrochimique telle définie ci-dessus, les caractéristiques avantageuses de cette cellule électrochimique pouvant être prises seules ou en combinaison.

En particulier, lorsque l'électrode négative de la cellule électrochimique comprend du lithium métallique ou un oxyde métallique lithié, l'accumulateur au lithium correspondant est un accumulateur au lithium ion-double.

Dans le cas où l'électrode négative de la cellule électrochimique comprend du graphite, l'accumulateur au lithium correspondant est un accumulateur au lithium graphite-double.

L'invention se rapporte, en dernier lieu, à une utilisation d'une cellule électrochimique telle que définie ci-dessus ou d'un accumulateur au lithium tel que défini ci-dessus, les caractéristiques avantageuses de cette cellule électrochimique ou de cet accumulateur au lithium pouvant être prises seules ou en combinaison.

Selon l'invention, cette utilisation peut être envisagée dans des domaines divers et variés.

On peut notamment citer, de manière non limitative, les domaines suivants :
- le domaine de l'électronique, par exemple pour les appareils grand public tels que les ordinateurs et téléphones portables, les agendas électroniques, les appareils de photographie ou de vidéo numérique,...
- le domaine de la sécurité, et notamment les systèmes de détection, de reconnaissance et/ou de surveillance, ou encore
- le domaine de l'aérospatiale, et notamment les satellites, les robots et sondes.

D'autres caractéristiques et avantages de l'invention apparaîtront mieux à la lecture du complément de description qui suit, qui se rapporte à des modes particuliers de réalisation de l'invention.

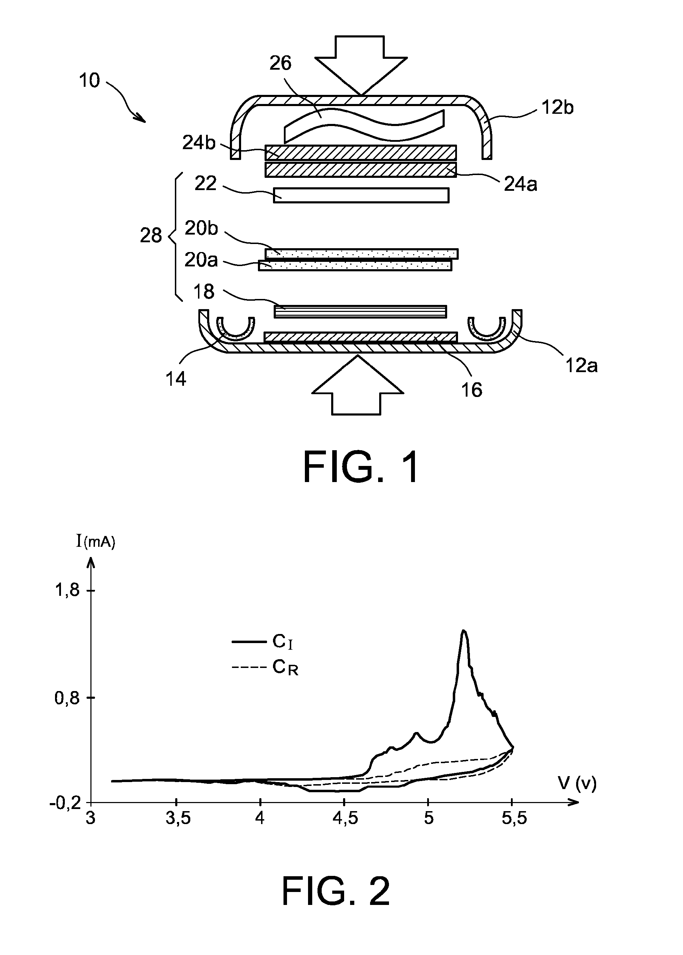

Ce complément de description, qui se réfère notamment aux figures 1 à 6 telles qu'annexées, est donnée à titre d'illustration de l'objet de l'invention et ne constitue en aucun cas une limitation de cet objet.

### BRÈVE DESCRIPTION DES DESSINS

La figure 1 représente une vue schématique éclatée d'un accumulateur comprenant une cellule électrochimique, cet accumulateur se présentant sous la forme d'une pile bouton.
La figure 2 illustre les courbes obtenues en voltampérométrie cyclique traduisant l'évolution du flux de courant (noté I et exprimé en mA) en fonction de la différence de potentiel (notée V et exprimée en V par rapport au couple Li/Li⁺) telle qu'obtenue avec des piles boutons comprenant respectivement une cellule électrochimique conforme à l'invention (notée C_{I}) et une cellule électrochimique de référence (notée C_{R}).

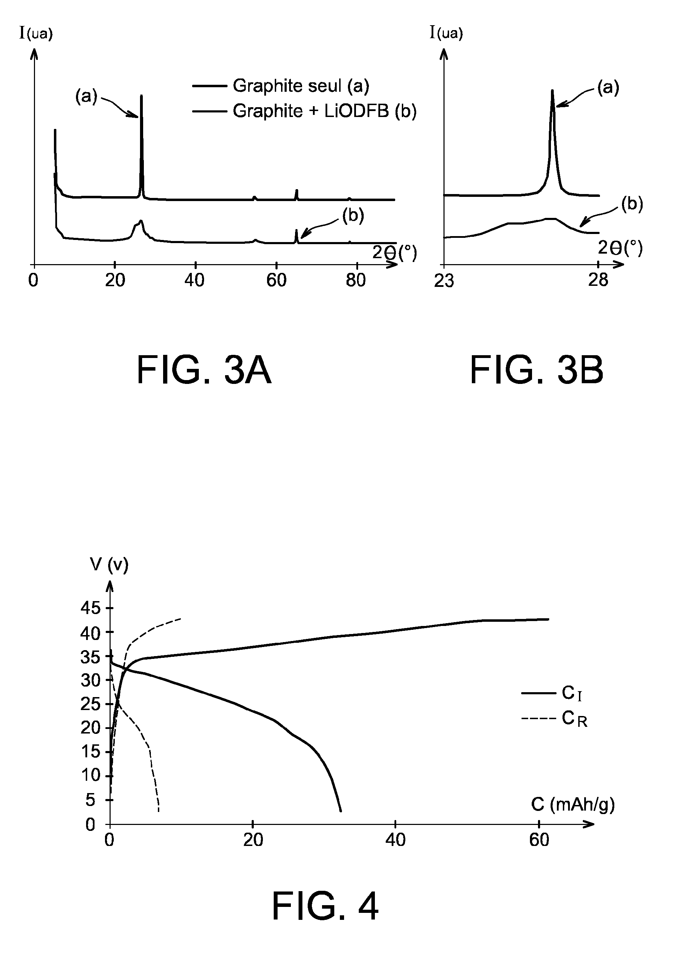

La figure 3A représente deux diffractogrammes, obtenus par la technique de diffractométrie de rayons X (DRX, raie K_{α} du cuivre de λ=1,5405 Â), traduisant l'évolution de l'intensité des rayons X diffusés telle que détectée (notée I et exprimée en unité d'angle solide ua) en fonction de l'angle de déviation deux-thêta du faisceau desdits rayons X (noté 2θ et exprimé en °), pour deux graphites, le premier graphite (noté graphite seul) étant du graphite initial dépourvu de sel de lithium (voir diffractogramme (a)), le deuxième graphite (noté graphite + LiODFB) correspondant au graphite de la cellule électrochimique C_{I} après une charge à 5,1 V de la pile bouton (notée P_{I}) comprenant ladite cellule électrochimique C_{I} dans laquelle l'électrolyte est le sel LiODFB (voir diffractogramme (b)).
La figure 3B correspond à un grossissement des diffractogrammes de la figure 3A au niveau des pics repérés, sur la figure 3A, dans l'intervalle de l'angle de déviation 2θ compris entre 23° et 28°.
La figure 4 illustre les courbes de cyclage galvanostatique à C/10 et à température ambiante, traduisant l'évolution du potentiel (noté V et exprimé en V par rapport au couple Li/Li⁺) en fonction de la capacité spécifique (notée C et exprimée en mAh/g) obtenue pour chacune des cellules électrochimiques C_{I} et C_{R} après un quatrième cycle de charge et de décharge mis en oeuvre avec les piles boutons P_{I} et P_{R}.

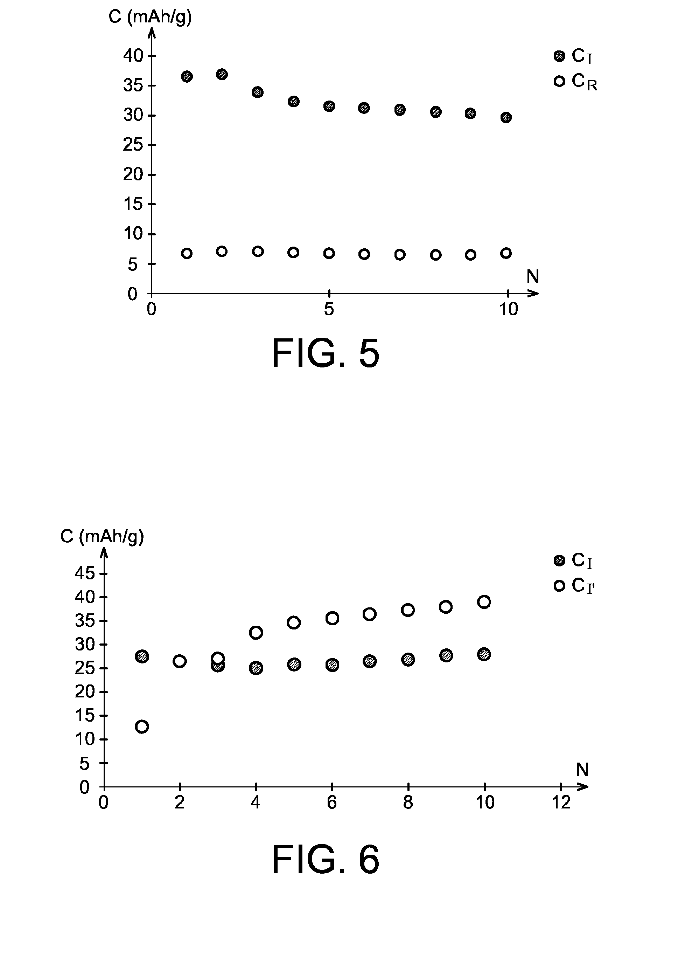

La figure 5 représente des graphiques illustrant l'évolution de la capacité spécifique (notée C et exprimée en mAh/g) des cellules électrochimiques C_{I} et C_{R}, en décharge à C/10 et à température ambiante, en fonction du nombre de cycles de charge et de décharge (noté N) des piles boutons P_{I} et P_{R}.
La figure 6 représente des graphiques illustrant l'évolution de la capacité spécifique (notée C et exprimée en mAh/g) des cellules électrochimiques C_{I} et C_{I'}, lors du cyclage galvanostatique à C/10 et à température ambiante, en fonction du nombre de cycles de charge et de décharge (noté N) des piles boutons P_{I} et P_{I'}.

### EXPOSÉ DÉTAILLÉ DE MODES DE RÉALISATION PARTICULIERS

Les présents exemples illustrent le comportement de trois cellules électrochimiques, deux étant conformes à l'invention (notées C_{I} et C_{I'}) et l'autre correspondant à une cellule électrochimique de référence (notée C_{R}).

Chacune de ces trois cellules électrochimiques est intégrée dans un accumulateur qui, dans les présents exemples, se présente sous la forme d'une pile bouton qui est représentée, par une vue schématique éclatée, sur la figure 1.

La pile bouton 10 représentée à la figure 1 comprend deux couvercles, un couvercle inférieur 12a et un couvercle supérieur 12b, ces couvercles 12a et 12b formant, après fermeture, le boîtier de la pile bouton 10. L'étanchéité entre les couvercles 12a et 12 b, couramment réalisés en acier inoxydable, est assurée au moyen du joint d'étanchéité 14, par exemple en polypropylène.

A l'intérieur du boîtier de la pile bouton 10, se trouve une structure empilée qui comprend, à partir du couvercle inférieur 12a, les éléments suivants :
- une première cale 16, qui est classiquement en acier inoxydable,
- une électrode positive 18,
- au moins une membrane de séparation, étant précisé que la pile bouton représentée sur la figure 1 comprend deux membranes de séparation 20a et 20b, toutes deux imbibées d'une solution électrolytique,
- une électrode négative 22,
- au moins une deuxième cale, qui est classiquement en acier inoxydable, étant précisé que la pile bouton 10 représentée sur la figure 1 comprend une deuxième cale 24a et une troisième cale 24b, et
- un ressort 26.

La cellule électrochimique 28 de la pile bouton 10 comprend l'électrode positive 18, les membranes de séparation 20a et 20b ainsi que l'électrode négative 22.

Les cales 16, 24a et 24b permettent d'assurer le bon contact des collecteurs de courant, présents dans les électrodes positive 18 et négative 22, avec les parties externes (ou bornes) de la pile bouton 10.

Le ressort 26 permet, après assemblage des différents éléments puis fermeture du boîtier de la pile bouton 10, d'assurer le contact entre tous ces éléments.

### Accumulateurs au lithium de type ion-double

Les cellules électrochimiques C_{I} et C_{R} comprennent toutes deux une même électrode positive ainsi qu'une même électrode négative, tant en termes de dimensions que de composition.

Seules les solutions électrolytiques imbibant les membranes de séparation diffèrent par la nature de l'électrolyte dissous dans le solvant, ce dernier étant par ailleurs identique pour ces cellules électrochimiques C_{I} et C_{I'}.

L'électrode positive de chacune des cellules électrochimiques C_{I} et C_{R} est réalisée par enduction d'une feuille d'aluminium avec une composition à base de graphite. Cette composition, qui comprend 90% en masse de graphite, 5% en masse de carboxyméthylcellulose (CMC) et 5% en masse de noir de carbone conducteur Super P^{®} (société Timcal) dans de l'eau est, après mélange, enduite sur la feuille d'aluminium de manière à obtenir un grammage d'environ 5 mg/cm². Cette électrode positive est calandrée puis découpée sous la forme d'un disque présentant un diamètre de 16 mm.

L'électrode négative de chacune des cellules électrochimiques Cᵢ et C_{R} est constituée par un disque de lithium métallique présentant également un diamètre de 16 mm.

Les solutions électrolytiques sont préparées par dissolution d'un électrolyte à une concentration molaire 1M dans un mélange de carbonates, en l'espèce un mélange de carbonate d'éthylène (EC), de carbonate éthylique méthylique (EMC) et de carbonate de diméthyle (DMC), dans des proportions volumiques respectives de 1/1/1.

Les électrolytes dissous dans le mélange de carbonates mentionné ci-dessus sont l'oxalyldifluoroborate de lithium (LiODFB) pour la réalisation de la cellule électrochimique C_{I} conforme à l'invention et le bis(oxalato)borate de lithium (LiBOB) pour la réalisation de la cellule électrochimique de référence C_{R}.

Chacune de ces solutions électrolytiques est imbibée dans une membrane de séparation se présentant sous la forme d'un disque monocouche de polypropylène. Dans les présents exemples, les disques utilisés comme membrane de séparation sont des disques commercialisés par la société Celgard sous la dénomination commerciale Celgard^{®}2400.

Deux piles boutons P_{I} et P_{R} ont été respectivement fabriquées à partir des cellules électrochimiques C_{I} et C_{R}, par empilement des éléments suivants, en référence à la figure 1 et à partir du fond du boîtier de la pile bouton 10 constitué par le couvercle inférieur 12a en acier inoxydable :
- la première cale 16 se présentant sous la forme d'un disque en acier inoxydable,
- l'électrode positive 18 formée de la feuille d'aluminium enduite de la composition à base de graphite précisée ci-dessus,
- les deux membranes de séparation 20a et 20b Celgard^{®}2400 imbibées de leur solution électrolytique respective,
- l'électrode négative 22 formée par le disque en lithium métallique,
- les deuxième et troisième cales 24a, 24b se présentant sous la forme de disques en acier inoxydable,
- le ressort 26, également en acier inoxydable,
- le joint 14 en polypropylène puis
- le couvercle supérieur 12b.

Le boîtier de la pile bouton 10, formé par les couvercles inférieur 12a et supérieur 12b, est alors fermé, par exemple au moyen d'une sertisseuse, de manière à rendre ladite pile bouton 10 parfaitement étanche à l'air.

Les piles boutons P_{I} et P_{R} ainsi réalisées correspondent toutes deux à des accumulateurs au lithium ion-double.

Des tests en voltampérométrie cyclique ont été conduits avec ces deux piles boutons P_{I} et P_{R}. Les courbes correspondantes telles qu'obtenues sont illustrées sur la figure 2.

On observe que la courbe obtenue avec la pile bouton P_{R} comprenant la cellule électrochimique C_{R} avec LiBOB comme électrolyte ne présente aucun pic caractéristique contrairement à la courbe obtenue avec la pile bouton P_{I} comprenant la cellule électrochimique C_{I} avec LiODFB comme électrolyte. En effet, la courbe obtenue avec la cellule électrochimique C_{I} présente des pics à 4,7 V, à 4,8 V, à 4,94 V et à 5,22 V, ces différents pics correspondant à plusieurs stades d'intercalation de l'anion ODFB⁻ dans la structure graphitique de l'électrode positive de la cellule électrochimique.

Pour confirmer cette observation, des mesures par diffractométrie de rayons X (DRX) ont été effectuées sur deux électrodes de graphite, avec une première électrode en graphite initial et une deuxième électrode en graphite après une charge à 5,1 V dans une solution électrolytique comprenant du LiODFB.

Les diffractogrammes correspondants sont illustrés aux les figures 3A et 3B.

La figure 3A montre clairement la disparition du pic lié au plan (002) du graphite initial au profit d'un nouveau pic à une valeur d'angle de déviation 2θ inférieure pour le graphite après une charge en présence de LiODFB, comme le montre clairement le grossissement de la figure 3B. Ce nouveau pic est caractéristique de l'élargissement de certains plans cristallographiques du graphite, cet élargissement s'expliquant par l'intercalation de l'anion ODFB⁻ entre ces plans. Plus précisément, dans le cas présent, on observe des distances élargies selon l'axe c du cristal liées à l'intercalation de l'anion ODFB⁻.

Les piles boutons P_{I} et P_{R} ont été également testées en cyclage galvanostatique.

Les courbes de cyclage galvanostatique reportées sur la figure 4 permettent d'observer la signature électrochimique de l'électrode positive en graphite en fonction de l'électrolyte considéré.

Les graphiques de la figure 5, quant à eux, illustrent l'évolution de la capacité spécifique C des cellules électrochimiques C_{I} et C_{R} en fonction du nombre de cycles de charge et de décharge N des piles boutons P_{I} et P_{R}.

Il découle de l'observation de ces courbes et graphiques des figures 4 et 5 que, pour la cellule électrochimique C_{R} mettant en oeuvre le sel LiBOB comme électrolyte, la charge est faible et, qu'après quelques cycles de charge et de décharge, l'on ne décharge plus que 6 mAh.g⁻¹. Par contre, avec la cellule électrochimique C_{I} mettant en oeuvre le sel LiODFB comme électrolyte, il est possible de décharger cinq fois plus de capacité spécifique. Ceci confirme donc bien qu'ODFB⁻ est un anion qui s'intercale dans les couches de graphène du graphite de l'électrode positive.

### Accumulateurs au lithium de type graphite-double

Une deuxième cellule électrochimique C_{I'} conforme à l'invention a été réalisée. Cette cellule électrochimique C_{I'} est structurellement identique à la cellule électrochimique C_{I}, à l'exception de l'électrode négative qui n'est plus en lithium métallique, comme pour la cellule électrochimique C_{R}, mais qui comprend du graphite.

Plus précisément, l'électrode négative de la cellule électrochimique C_{I'} est réalisée par enduction d'une feuille de cuivre avec une composition à base de graphite identique à celle décrite précédemment pour la réalisation de l'électrode positive de la cellule électrochimique C_{I}. L'enduction de cette composition aboutit à un grammage d'environ 5 mg/cm².

La pile bouton P_{I'} obtenue avec cette deuxième cellule électrochimique C_{I'} correspond à un accumulateur au lithium graphite-double.

Les piles boutons P_{I} et P_{I'} ont été soumises à un test de cyclage galvanostatique. Les graphiques de la figure 6 illustrent l'évolution de la capacité spécifique C des cellules électrochimiques C_{I} et C_{I'} en fonction du nombre de cycles de charge et de décharge N des piles boutons P_{I} et P_{I'}.

On observe que l'on obtient de meilleurs résultats pour l'accumulateur au lithium graphite-double, avec des capacités spécifiques supérieures pour la pile bouton P_{I'} mettant en oeuvre la cellule électrochimique C_{I'}. Ce phénomène peut sans doute s'expliquer par la bonne interaction entre l'électrolyte LiODFB et le graphite en réduction.

Ainsi, il a été démontré que, du fait de l'intercalation possible et satisfaisante de l'anion ODFB⁻ dans les couches de graphène du graphite formant l'électrode positive d'une cellule électrochimique d'un accumulateur au lithium, l'oxalyldifluoroborate de lithium (LiODFB) est un électrolyte tout à fait envisageable, que ce soit dans un accumulateur au lithium de type ion-double ou dans un accumulateur au lithium de type graphite-double.

### BIBLIOGRAPHIE

**[1]** T. Placke et al., J. Electrochem. Soc., 2012, 159 (11), pages A1755-A1765
**[2]** S. S. Zhang, Electrochem. Commun., 2006, 8, pages 1423-1428
**[3]** V. Aravindan et al., Chem. Eur. J., 2011, 17, pages 14326-14346
**[4]** US 6,506,516
**[5]** W. Xu, Electrochem. Solid-State Lett., 2001, 4 (1), pages E1-E4

## Revendications

1. Cellule électrochimique pour accumulateur au lithium comprenant une électrode positive comprenant du graphite, une électrode négative ainsi qu'une solution électrolytique disposée entre les électrodes positive et négative, la solution électrolytique comprenant au moins un sel de lithium et au moins un solvant, **caractérisée en ce que** le sel de lithium est l'oxalyldifluoroborate de lithium LiODFB et le solvant est un solvant organique.

2. Cellule électrochimique selon la revendication 1, dans laquelle l'électrode positive comprend une feuille métallique, par exemple en aluminium, revêtue d'une composition à base de graphite.

3. Cellule électrochimique selon la revendication 2, dans laquelle la composition à base de graphite de l'électrode positive comprend du graphite et, avantageusement, au moins un liant, tel que de la carboxyméthylcellulose et/ou au moins un composé électriquement conducteur, tel que du noir de carbone.

4. Cellule électrochimique selon l'une quelconque des revendications 1 à 3, dans laquelle l'électrode négative comprend du lithium métallique ou un oxyde métallique lithié.

5. Cellule électrochimique selon l'une quelconque des revendications 1 à 3, dans laquelle l'électrode négative comprend du graphite.

6. Cellule électrochimique selon la revendication 5, dans laquelle l'électrode négative comprend une feuille métallique, par exemple en cuivre, revêtue d'une composition à base de graphite.

7. Cellule électrochimique selon la revendication 6, dans laquelle composition à base de graphite de l'électrode négative comprend du graphite et, avantageusement, au moins un liant, notamment de la carboxyméthylcellulose et/ou au moins un composé électriquement conducteur, tel que du noir de carbone.

8. Cellule électrochimique selon l'une quelconque des revendications 1 à 7, dans laquelle le solvant organique comprend au moins un solvant carbonate choisi parmi les carbonates cycliques, les carbonates linéaires et les mélanges de ceux-ci.

9. Cellule électrochimique selon la revendication 8, dans laquelle le solvant carbonate comprend au moins un composé choisi parmi le groupe constitué par le carbonate d'éthylène (EC), le carbonate de propylène (PC), le carbonate éthylique méthylique (EMC) et le carbonate de diméthyle (DMC).

10. Cellule électrochimique selon l'une quelconque des revendications 1 à 9, dans laquelle le sel d'oxalyldifluoroborate de lithium LiODFB est présent, dans la solution électrolytique, dans une concentration molaire comprise entre 0,5 mol/l et 1,5 mol/l, avantageusement entre 0,8 mol/l et 1,2 mol/l et, préférentiellement, qui est de l'ordre de 1 mol/l.

11. Cellule électrochimique selon l'une quelconque des revendications 1 à 10, comprenant en outre au moins membrane de séparation électriquement non conductrice disposée entre les électrodes positive et négative.

12. Accumulateur au lithium comprenant au moins une cellule électrochimique selon l'une quelconque des revendications 1 à 11.

13. Accumulateur au lithium comprenant au moins une cellule électrochimique selon l'une quelconque des revendications 1 à 4 et 8 à 11, lorsque les revendications 8 à 11 dépendent de la revendication 4, qui est un accumulateur au lithium ion-double.

14. Accumulateur au lithium comprenant au moins une cellule électrochimique selon l'une quelconque des revendications 1 à 3 et 5 à 11, lorsque les revendications 8 à 11 dépendent de la revendication 5, qui est un accumulateur au lithium graphite-double.

15. Utilisation d'une cellule électrochimique selon l'une quelconque des revendications 1 à 11 ou d'un accumulateur au lithium selon l'une quelconque des revendications 12 à 14 dans un ordinateur ou téléphone portable, un agenda électronique et/ou un appareil de photographie ou de vidéo numérique.
